# EUROPEAN PATENT SPECIFICATION

(11) **EP 3 291 489 B1**
(45) Date of publication and mention of the grant of the patent: **30.06.2021**
(21) Application number: 17160673.4
(22) Date of filing: 13.03.2017
(51) Int. Cl.: H04L 12/24, H04L 12/28

(54) **METHOD AND APPARATUS FOR DEVICE IDENTIFICATION**
VERFAHREN UND VORRICHTUNG ZUR VORRICHTUNGSIDENTIFIZIERUNG
PROCÉDÉ ET APPAREIL D'IDENTIFICATION DE DISPOSITIF

(30) Priority: 30.08.2016 CN 201610787081
(43) Date of publication of application: 07.03.2018
(73) Proprietor: Beijing Xiaomi Mobile Software Co., Ltd., Beijing 100085 (CN)
(72) Inventor: GAO, Sitai, Haidian District, Beijing 100085 (CN); LV, Yangpeng, Haidian District, Beijing 100085 (CN); WU, Minghuan, Haidian District, Beijing 100085 (CN)
(74) Representative: Millburn, Julie Elizabeth

(56) References cited:
- WO-A1-2015/165317
- US-A1- 2015 242 066
- US-B1- 8 214 494
- US-B1- 8 837 360

## Description

### TECHNICAL FIELD

The present disclosure generally relates to the smart device technical field, and more particularly, to a method and apparatus for device identification.

### BACKGROUND

Currently, as more and more smart devices emerge, management has become a problem. For example, more domestic devices such as heating, lights, refrigerators, air conditioning units etc. are now smart devices and can be controlled via networks such as, Wi-Fi, Bluetooth, etc. often via internet link. In order to facilitate management, users usually divide smart devices into different groups manually so as to add each smart device to a created group. By doing this, when it is needed to control a certain smart device, a user can firstly determine the group which the smart device belongs to, or manually tag smart devices, and then determine the smart device to be controlled according to the tags. However, these solutions require users to manually divide smart devices into different groups or tag smart devices, and if reorganization is needed, previous grouping and tags need to be withdrawn, and users need to divide smart devices into different groups or tag smart devices manually again. This causes great operation loads to users, and grouping and tags cannot be updated automatically.

US 8,214,494 B1 describes a technique for providing network device management. In some implementations, a native mobile device application enables use of a mobile device to add new devices to a network, remove mobile devices from a network, change network and device profile settings, troubleshoot a network, provide an interface into network devices, communications, diagnostics, etc., and provide remote access to the network for installation, programming, troubleshooting, and inclusion.

US 8,837,360 B1 is directed to determining the geographical location of network entities. An embodiment is a method of determining a the geographical location of a host including, identifying at least one gateway communicatively coupled to the host, determining a geographical location of the at least one gateway based upon a proximity relationship between the gateway and a localizable entity, and determining the geographic location of the at least one gateway. Another embodiment is a method for a host to determine its geographic location by determining reachability information to communicatively coupled network entities, sending the reachability information to a location server, and by receiving geographic location information from the location server.

### SUMMARY

Embodiments of the present invention provide technical solutions as follows.

According to a first aspect of embodiments of the present disclosure, there is provided a method for device identification performed by a terminal configured to manage smart devices including:
obtaining network class identification of one or more network devices each of which establishes a network connection, wherein the network class identification indicates a network coverage position of the network connection established by each network device;
generating smart device position identification according to the network class identification, wherein the generating of the smart device position identification according to the network class identification includes;
determining one or more smart devices within a coverage range of the network coverage position according to the network class identification; and
generating the smart device position identification according to the network class identification and identities of the one or more smart devices, the method further includes;
displaying the smart device position identification in a smart device list on the terminal.

According to an embodiment, prior to obtaining of the network class identification of the one or more network devices each of which establishes a network connection, the method further includes:
receiving the network class identification which is entered; and/or
determining the network class identification according to a received instruction for selecting the network coverage position.

According to an embodiment, the determining of the one or more smart devices within the coverage range of the network coverage position according to the network class identification includes:
if the one or more network devices includes multiple different types of network devices, determining one or more smart devices within the coverage range of the network coverage position of each type of network devices; and
the generating of the smart device position identification according to the network class identification and the identities of the one or more smart devices includes:
according to the network class identification of each type of network devices and the identities of the one or more smart devices within the coverage range of the network coverage position of each type of the network devices, generating the smart device position identification of the one or more smart devices within the coverage range of the network coverage position of each type of network devices.

According to an embodiment, the one or more network devices include one or more of a router, a repeater and a switch.

According to a second aspect of embodiments of the present disclosure, there is provided a terminal configured to manage smart devices for device identification, including:
an obtaining module configured to obtain network class identification of one or more network devices each of which establishes a network connection, wherein the network class identification indicates a network coverage position of the network connection established by each network device;
a generation module configured to generate smart device position identification according to the network class identification; and
a display module configured to display the smart device position identification in a smart device list on the terminal.
wherein the generation module includes a determination sub-module configured to determine one or more smart devices within a coverage range of the network coverage position according to the network class identification; and
a generation sub-module configured to generate the smart device position identification according to the network class identification and identities of the one or more smart devices.

According to an embodiment, the apparatus further includes:
a receiving module configured to, before the network class identification of the one or more network devices each of which establishes a network connection is obtained, receive the network class identification which is entered; and/or
a determination module configured to determine the network class identification according to a received instruction for selecting the network coverage position.

According to an embodiment, the determination sub-module includes:
a determination unit configured to, if the one or more network devices include multiple different types of network devices, determine one or more smart devices within the coverage range of the network coverage position of each type of network devices; and
wherein the generation sub-module includes:
a generation unit configured to, according to the network class identification of each type of network devices and the identities of the one or more smart devices within the coverage range of the network coverage position of each type of the network devices, generate the smart device position identification of the one or more smart devices within the coverage range of the network coverage position of each type of network devices.

According to an embodiment, the one or more network devices include one or more of a router, a repeater and a switch.

According to a third aspect of embodiments of the present disclosure, there is provided a computer program, which when executing on a processor, performs any one of the above methods.

The technical solutions provided by embodiments of the present disclosure have the following advantageous effects.

In the technical solutions provided by embodiments of the present disclosure, after network class identification of one or more network devices each of which establishes a network connection is obtained, smart device position identification is automatically generated according to the network class identification, and the smart device position identification is displayed in a smart device list. In this way, users can clearly know the location of a smart device by viewing the smart device position identification in the smart device list. Because users are accustomed to finding and managing smart devices within a certain location range based on locations, the technical solutions can enable users to manage smart devices quickly and conveniently, without manually dividing smart devices into different groups or tagging smart devices by users.

It is to be understood that both the foregoing general description and the following detailed description are exemplary only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flowchart showing a method for device identification according to an exemplary embodiment.
Fig. 2 is a flowchart showing another method for device identification according to an exemplary embodiment.
Fig. 3 is a flowchart showing another method for device identification according to an exemplary embodiment.
Fig. 4 is a block diagram showing an apparatus for device identification according to an exemplary embodiment.
Fig. 5 is a block diagram showing another apparatus for device identification according to an exemplary embodiment.
Fig. 6 is a block diagram for an apparatus for device identification according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with aspects related to the present disclosure as recited in the appended claims.

Currently, as more and more smart devices emerge, management has become a problem. In order to facilitate management, users usually divide smart devices into different groups manually so as to add each smart device to a created group. By doing this, when it is needed to control a certain smart device, a user can firstly determine the group which the smart device belongs to, or manually tag smart devices, and then determine the smart device to be controlled according to the tags. However, these solutions require users to manually divide smart devices into different groups or tag smart devices, and if reorganization is needed, previous grouping and tags need to be withdrawn, and users need to divide smart devices into different groups or tag smart devices manually again. This causes great operation loads to users, and grouping and tags cannot be updated automatically.

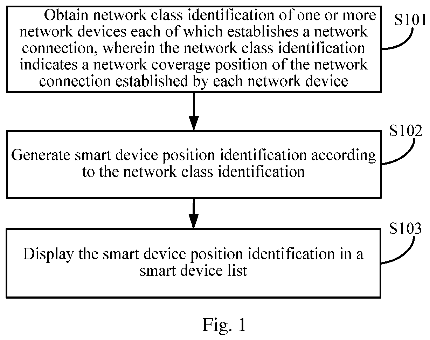

In order to solve the above technical problem, embodiments of the present disclosure provide a method for device identification. The method can be applied in a device identification program, system or apparatus, and the method can be performed by a terminal such as a mobile phone, a tablet or a computer which is used to manage smart devices. As shown in Fig. 1, the method includes steps S101 to S103.

In step S101, network class identification of one or more network devices each of which establishes a network connection is obtained. The network class identification indicates a network coverage position of the network connection established by each network device.

The network connection may include wired and wireless network connections. The wireless network connection may be Bluetooth network connection, WiFi network connection, or mobile data network connection, and the like.

The network class identification can indicate a network coverage position of the network connection established by each network device. For example, if the network connection established by a network device covers an XX building, the network coverage position of the network connection is the XX building. If the network connection established by a network device covers an XX house, the network coverage position of the network connection is the XX house. If the network connection established by a network device covers an XX living room of an XX house, the network coverage position of the network connection is the XX living room of the XX house.

The one or more network devices can be any device that is capable of establishing a network, for example, devices such as a router, a repeater, a switch, or even a mobile phone.

In step S102, smart device position identification is generated according to the network class identification.

In step S103, the smart device position identification is displayed in a smart device list.

In this technical solution, after network class identification of one or more network devices each of which establishes a network connection is obtained, smart device position identification is automatically generated according to the network class identification, and the smart device position identification is displayed in a smart device list. In this way, users can clearly know the location of a smart device by viewing the smart device position identification in the smart device list. Because users are accustomed to finding and managing (for example, controlling) smart devices within a certain location range based on locations, the technical solutions can enable users to manage smart devices quickly and conveniently, without manually dividing smart devices into different groups or tagging smart devices by users.

Further, because the smart device position identification is generated according to the network class identification, when the smart device position identification is displayed in a smart device list, smart device position identification of smart devices having the same network class identification can be naturally displayed together, and smart device position identification of smart devices having different network class identification can be naturally displayed separately. Thus, smart devices can be automatically grouped/classified according to the network class identification.

According to an embodiment, prior to step S101 in Fig. 1, the method may further include:
receiving the network class identification which is entered; and/or
determining the network class identification according to a received instruction for selecting the network coverage position.

The network class identification can be entered by a user, i.e., the network class identification is added by the user.

When the network coverage position of the network connection includes a plurality of optional positions, an instruction for selecting the network coverage position is received, then the network coverage position corresponding to the instruction is selected from the plurality of optional positions, and the network class identification can be automatically determined according to the network coverage position corresponding to the instruction.

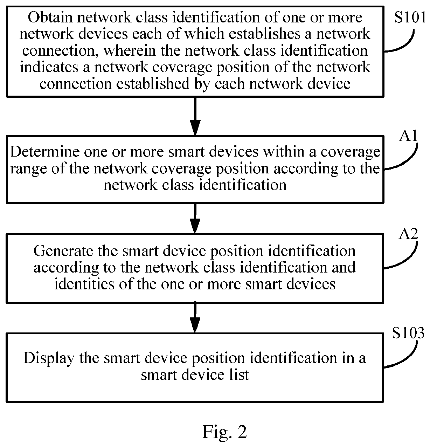

As shown in Fig. 2, step S102 in Fig. 1 can be realized by the following steps.

In step A1, one or more smart devices within a coverage range of the network coverage position are determined according to the network class identification. There may be one or more smart devices within the coverage range of the network coverage position, and the smart devices can be of the same type or different types. If the smart devices within the coverage range of the network coverage position include a plurality of smart devices of the same type, the plurality of smart devices of the same type can be identified using numbers, or models.

In step A2, the smart device position identification is generated according to the network class identification and identities of the one or more smart devices. The identities of the one or more smart devices can be information which is used to identify the smart devices, such as names, models or numbers of the smart devices. The smart devices can be devices which can be managed using networks, are located within the coverage range of the network coverage position and are connected to the networks, for example, smart lights, smart air purifiers, smart washing machines, smart air conditioners, smart refrigerators, mobile phones. When the smart device position identification is generated for the smart devices, the network class identification can be combined with the identities of the smart devices to obtain the smart device position identification of the smart devices.

After the network class identification is obtained, the smart devices within the coverage range of the network coverage position as indicated by network class identification, and then the smart device position identification can be automatically generated according to the network class identification and identities of the smart devices. For example, if the network class identification is the second floor of an XX house, the identity of a smart device indicates that the smart device is a smart light, the smart device position identification of the smart light may be: second floor of the XX house-smart light. If the network class identification is the third floor of an XX building and the identity of the smart device indicates that the smart device is No.1 smart air conditioner, the smart device position identification of the No.1 smart air conditioner may be: the third floor of the XX building -No.1 smart air conditioner. In this way, users do not need to manually tag the smart device, and because the smart device position identification directly indicates the network class identification (i.e., the network coverage position of the network connection established by the network device), users can quickly find a smart device located at a certain position according to the differences between the network coverage positions and manage the smart device, without manually dividing the smart devices into groups by the users.

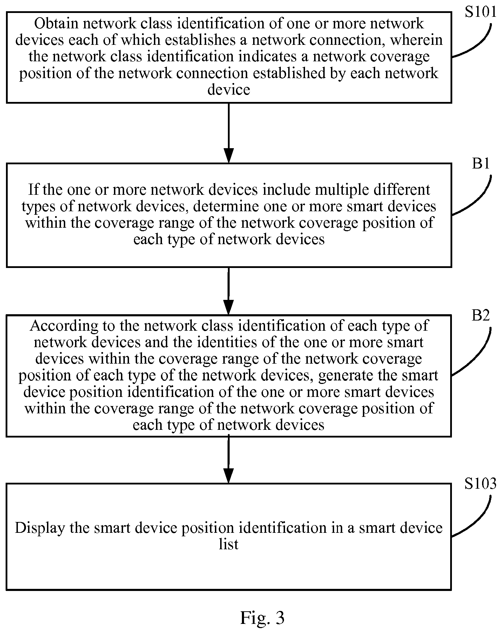

As shown in Fig. 3, according to an embodiment, step A1 in Fig. 2 may be realized by the following step.

In step B1, if the one or more network devices include multiple different types of network devices, one or more smart devices within the coverage range of the network coverage position of each type of network devices are determined.

Step A2 in Fig. 2 may be realized by the following step.

In step B2, according to the network class identification of each type of network devices and the identities of the one or more smart devices within the coverage range of the network coverage position of each type of the network devices, the smart device position identification of the one or more smart devices within the coverage range of the network coverage position of each type of network devices is generated. There may be one or more smart devices within the network coverage range of each type of smart devices, no matter whether the number is one or more, when the smart device position identification is generated for each smart device within the coverage range of the network coverage position of each type of network devices, the smart device position identification can be generated according to the network class identification of the network devices within the coverage range of the network coverage position where the smart device is located and the identity of the smart device.

If there are multiple different types of network devices, one or more smart devices within the coverage range of the network coverage position of each type of network devices are determined, and then according to the network class identification of each type of network devices and the identities of the one or more smart devices within the coverage range of the network coverage position of each type of the network devices, the smart device position identification of the one or more smart devices within the coverage range of the network coverage position of each type of network devices can be generated automatically, so that more accurate and comprehensive position identification can be automatically generated for one or more smart devices within the coverage range of the network coverage position of each type of network devices. This can enable users to conveniently find and manage smart devices within the coverage range of a certain network coverage position. Also, in order to further facilitate users to manage smart devices, the smart device position identification may be generated for one or more smart devices within the coverage range of the network coverage position of each type of network devices according to the priority of the network class identification of each type of network devices (for example, a higher priority may be applied to a predetermined network device or a network device covers a larger range) and the identities of the smart devices within the coverage range of the network coverage position of each type of network devices, so that the network class identification of the type of network devices having a higher priority is given a higher ranking in the smart device position identification. For example, there are two types of network devices, i.e., a router and a repeater, the network coverage position covered by the network established by the router is an XX house (i.e., the network class identification of the router is the XX house), the smart devices on the XX house include a No. 1 smart light and a No. 2 smart light, the network coverage position covered by the network established by the repeater is a south bedroom on the XX house (i.e., the network class identification of the repeater is the south bedroom of the XX house), the smart device at the south bedroom of the XX house is the No. 2 smart light. If the priority of the router is higher than the priority of the repeater, the smart device position identification of the No. 1 smart light may be the XX house-the No.1 smart light, and the smart device position identification of the No. 2 smart light may be the XX house-the south bedroom-the No.2 smart light (in the smart device position identification of the No. 2 smart light, the network class identification of the router which has a higher priority is given a higher ranking than the network class identification of the repeater which has a lower priority).

According to an embodiment, the network devices may include one or more of a router, a repeater and a switch.

The network devices can be any device that is capable of establishing a network, for example, devices such as a router, a repeater, a switch, or even a mobile phone.

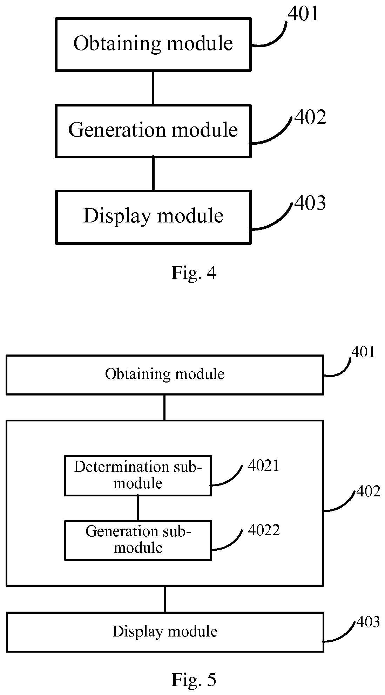

Corresponding to the above methods for device identification, embodiments of the present disclosure also provide an apparatus for device identification. As shown in Fig. 4, the apparatus includes an obtaining module 401, a generation module 402 and a display module 403.

The obtaining module 401 is configured to obtain network class identification of one or more network devices each of which establishes a network connection, wherein the network class identification indicates a network coverage position of the network connection established by each network device.

The generation module 402 is configured to generate smart device position identification according to the network class identification.

The display module 403 is configured to display the smart device position identification in a smart device list.

According to an embodiment, the apparatus further includes:
a receiving module configured to, before the network class identification of the one or more network devices each of which establishes a network connection is obtained, receive the network class identification which is entered; and/or
a determination module configured to determine the network class identification according to a received instruction for selecting the network coverage position.

As shown in Fig. 5, the generation module 402 as shown in Fig. 4 includes a determination sub-module 4021 and a generation sub-module 4022.

The determination sub-module 4021 is configured to determine one or more smart devices within a coverage range of the network coverage position according to the network class identification.

The generation sub-module 4022 is configured to generate the smart device position identification according to the network class identification and identities of the one or more smart devices.

According to an embodiment, the determination sub-module 4021 may include:
a determination unit configured to, if the one or more network devices include multiple different types of network devices, determine one or more smart devices within the coverage range of the network coverage position of each type of network devices.

The generation sub-module may include:
a generation unit configured to, according to the network class identification of each type of network devices and the identities of the one or more smart devices within the coverage range of the network coverage position of each type of the network devices, generate the smart device position identification of the one or more smart devices within the coverage range of the network coverage position of each type of network devices.

According to an embodiment, the one or more network devices include one or more of a router, a repeater and a switch.

According to the present disclosure, there is provided an apparatus for device identification, including:
a processor; and
a memory for storing instructions executable by the processor;
wherein the processor is configured to:
obtain network class identification of one or more network devices each of which establishes a network connection, wherein the network class identification indicates a network coverage position of the network connection established by each network device;
generate smart device position identification according to the network class identification; and
display the smart device position identification in a smart device list.

The processor may be further configured to:
receive the network class identification which is entered; and/or
determine the network class identification according to a received instruction for selecting the network coverage position.

According to the invention, the processor is configured to:
determine one or more smart devices within a coverage range of the network coverage position according to the network class identification; and
generate the smart device position identification according to the network class identification and identities of the one or more smart devices.

The processor may be configured to:
if the one or more network devices include multiple different types of network devices, determine one or more smart devices within the coverage range of the network coverage position of each type of network devices; and
according to the network class identification of each type of network devices and the identities of the one or more smart devices within the coverage range of the network coverage position of each type of the network devices, generate the smart device position identification of the one or more smart devices within the coverage range of the network coverage position of each type of network devices.

According to an embodiment, the one or more network devices include one or more of a router, a repeater and a switch.

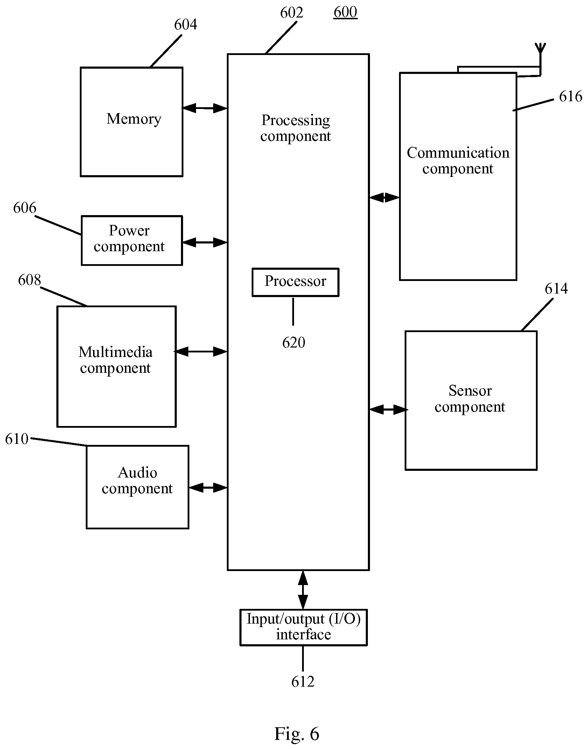

Fig. 6 is a block diagram showing an apparatus 600 for device identification according to an exemplary embodiment. The apparatus may be applied in a terminal device. For example, the apparatus 600 may be a mobile phone, a computer, a digital broadcast terminal, a messaging device, a gaming console, a tablet, a medical device, exercise equipment, a personal digital assistant, and the like.

Referring to Fig. 6, the apparatus 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the apparatus 600, such as the operations associated with display, telephone calls, data communications, camera operations, and recording operations. The processing component 602 may include one or more processors 620 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the apparatus 600. Examples of such data include instructions for any applications or methods operated on the apparatus 600, contact data, phonebook data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the apparatus 600. The power component 606 may include a power management system, one or more power sources, and any other components associated with the generation, management, and distribution of power in the apparatus 600.

The multimedia component 608 includes a screen providing an output interface between the apparatus 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and the rear camera may receive an external multimedia datum while the apparatus 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone ("MIC") configured to receive an external audio signal when the apparatus 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the apparatus 600. For instance, the sensor component 614 may detect an open/closed status of the apparatus 600, relative positioning of components, e.g., the display and the keypad, of the apparatus 600, a change in position of the apparatus 600 or a component of the apparatus 600, a presence or absence of user contact with the apparatus 600, an orientation or an acceleration/deceleration of the apparatus 600, and a change in temperature of the apparatus 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communication, wired or wirelessly, between the apparatus 600 and other devices. The apparatus 600 can access a wireless network based on a communication standard, such as WiFi, 2G, or 3G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

The apparatus 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

There is also provided a non-transitory computer-readable storage medium including instructions, such as included in the memory 604, executable by the processor 620 in the apparatus 600, for performing the above-described methods. For example, the non-transitory computer-readable storage medium may be a ROM, a RAM, a CD-ROM, a magnetic tape, a floppy disc, an optical data storage device, and the like.

There is provided a non-transitory computer-readable storage medium, when instructions in the storage medium are executed by the processor in the above apparatus 600, the apparatus 600 is caused to perform a method for device identification, including:
obtaining network class identification of one or more network devices each of which establishes a network connection, wherein the network class identification indicates a network coverage position of the network connection established by each network device;
generating smart device position identification according to the network class identification; and
displaying the smart device position identification in a smart device list.

According to an embodiment, prior to obtaining of the network class identification of the one or more network devices each of which establishes a network connection, the method further includes:
receiving the network class identification which is entered; and/or
determining the network class identification according to a received instruction for selecting the network coverage position.

The generating of the smart device position identification according to the network class identification includes:
determining one or more smart devices within a coverage range of the network coverage position according to the network class identification; and
generating the smart device position identification according to the network class identification and identities of the one or more smart devices.

According to an embodiment, the determining of the one or more smart devices within the coverage range of the network coverage position according to the network class identification includes:
if the one or more network devices include multiple different types of network devices, determining one or more smart devices within the coverage range of the network coverage position of each type of network devices; and
the generating of the smart device position identification according to the network class identification and the identities of the one or more smart devices includes:
according to the network class identification of each type of network devices and the identities of the one or more smart devices within the coverage range of the network coverage position of each type of the network devices, generating the smart device position identification of the one or more smart devices within the coverage range of the network coverage position of each type of network devices.

According to an embodiment, the one or more network devices include one or more of a router, a repeater and a switch.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for device identification performed by a terminal configured to manage smart devices, comprising:
obtaining (S101) network class identification of one or more network devices each of which establishes a network connection, wherein the network class identification indicates a network coverage position of the network connection established by each network device;
generating (S102) smart device position identification according to the network class identification; and
displaying (S103) on the terminal the smart device position identification in a smart device list;
wherein the generating (S102) of the smart device position identification according to the network class identification comprises:
determining (A1) one or more smart devices within a coverage range of the network coverage position according to the network class identification; and
generating (A2) the smart device position identification according to the network class identification and identities of the one or more smart devices.

2. The method according to claim 1, wherein prior to obtaining (S101) of the network class identification of the one or more network devices each of which establishes a network connection, the method further comprises:
receiving the network class identification which is entered; and/or
determining the network class identification according to a received instruction for selecting the network coverage position.

3. The method according to claim 1 or 2, wherein the determining (A1) of the one or more smart devices within the coverage range of the network coverage position according to the network class identification comprises:
if the one or more network devices comprise multiple different types of network devices, determining (B1) one or more smart devices within the coverage range of the network coverage position of each type of network devices; and
wherein the generating (A2) of the smart device position identification according to the network class identification and the identities of the one or more smart devices comprises:
according to the network class identification of each type of network devices and the identities of the one or more smart devices within the coverage range of the network coverage position of each type of the network devices, generating (B2) the smart device position identification of the one or more smart devices within the coverage range of the network coverage position of each type of network devices.

4. The method according to any one of claims 1 to 3, wherein the one or more network devices comprise one or more of a router, a repeater and a switch.

5. A terminal configured to manage smart devices for device identification, comprising:
an obtaining module (401) configured to obtain network class identification of one or more network devices each of which establishes a network connection, wherein the network class identification indicates a network coverage position of the network connection established by each network device;
a generation module (402) configured to generate, at the network device, smart device position identification according to the network class identification; and
a display module (403) configured to display the smart device position identification in a smart device list on the terminal;
wherein the generation module (402) comprises:
a determination sub-module (4021) configured to determine one or more smart devices within a coverage range of the network coverage position according to the network class identification; and
a generation sub-module (4022) configured to generate the smart device position identification according to the network class identification and identities of the one or more smart devices.

6. The mobile device according to claim 5, further comprising:
a receiving module configured to, before the network class identification of the one or more network devices each of which establishes a network connection is obtained, receive the network class identification which is entered; and/or
a determination module configured to determine the network class identification according to a received instruction for selecting the network coverage position.

7. The mobile device according to claim 5 or 6, wherein the determination sub-module (4021) comprises:
a determination unit configured to, if the one or more network devices comprise multiple different types of network devices, determine one or more smart devices within the coverage range of the network coverage position of each type of network devices; and
wherein the generation sub-module (4022) comprises:
a generation unit configured to, according to the network class identification of each type of network devices and the identities of the one or more smart devices within the coverage range of the network coverage position of each type of the network devices, generate the smart device position identification of the one or more smart devices within the coverage range of the network coverage position of each type of network devices.

8. The mobile device according to any one of claims 5 to 7, wherein the one or more network devices comprise one or more of a router, a repeater and a switch.

9. A computer program, which when executing on a processor, performs all steps of a method according to any one of claims 1 to 4.

## Patentansprüche

1. Verfahren zur Geräteidentifikation, das von einem Endgerät durchgeführt wird, das zum Verwalten von intelligenten Geräten konfiguriert ist, aufweisend:
Erhalten (S101) der Netzklassenidentifikation von ein oder mehr Netzgeräten, die jeweils eine Netzverbindung herstellen, wobei die Netzklassenidentifikation eine Netzabdeckungsposition der von jedem Netzgerät hergestellten Netzverbindung angibt;
Erzeugen (S102) einer Identifikation der Position des bzw. der intelligenten Geräte(s) gemäß der Netzklassenidentifikation und
Anzeigen (S103) der Identifikation der Position des bzw. der intelligenten Geräte(s) in einer Liste intelligenter Geräte auf dem Endgerät;
wobei das Erzeugen (S102) der Identifikation der Position des bzw. der intelligenten Geräte(s) gemäß der Netzklassenidentifikation Folgendes aufweist:
Bestimmen (A1) von ein oder mehr intelligenten Geräten innerhalb eines Abdeckungsbereichs der Netzabdeckungsposition gemäß der Netzklassenidentifikation; und
Erzeugen (A2) der Identifikation der Position des bzw. der intelligenten Geräte(s) gemäß der Netzklassenidentifikation und Identitäten der ein oder mehr intelligenten Geräte.

2. Verfahren nach Anspruch 1, wobei vor Beschaffen (S101) der Netzklassenidentifikation der ein oder mehr Netzgeräte, die jeweils eine Netzwerkverbindung herstellen, das Verfahren ferner Folgendes aufweist:
Empfangen der eingegebenen Netzklassenidentifikation; und/oder
Bestimmen der Netzklassenidentifikation gemäß einer empfangenen Anweisung zur Auswahl der Netzabdeckungsposition.

3. Verfahren nach Anspruch 1 oder 2, wobei das Bestimmen (A1) der ein oder mehr intelligenten Geräte innerhalb des Abdeckungsbereichs der Netzabdeckungsposition gemäß der Netzklassenidentifikation Folgendes aufweist:
wenn die ein oder mehr Netzgeräte mehrere verschiedene Typen von Netzgeräten aufweisen, Bestimmen (B1) von ein oder mehr intelligenten Geräten innerhalb des Abdeckungsbereichs der Netzabdeckungsposition jedes Typs von Netzgeräten; und
wobei das Erzeugen (A2) der Identifikation der Position des bzw. der intelligenten Geräte(s) gemäß der Netzklassenidentifikation und der Identitäten der ein oder mehr intelligenten Geräte Folgendes aufweist:
gemäß der Netzklassenidentifikation jedes Typs von Netzgeräten und der Identitäten der ein oder mehr intelligenten Geräte innerhalb des Abdeckungsbereichs der Netzabdeckungsposition jedes Typs von Netzgeräten Erzeugen (B2) der Identifikation der Position des bzw. der intelligenten Geräte(s) der ein oder mehr intelligenten Geräte innerhalb des Abdeckungsbereichs der Netzabdeckungsposition jedes Typs von Netzgeräten.

4. Verfahren nach einem der Ansprüche 1 bis 3, wobei die ein oder mehr Netzgeräte ein oder mehr von einem Router, einem Repeater und einem Switch aufweisen.

5. Endgerät, zum Verwalten von intelligenten Geräten für die Geräteidentifikation konfiguriert, das Folgendes aufweist:
ein Erhaltemodul (401), das zum Erhalten der Netzklassenidentifikation von ein oder mehr Netzgeräten konfiguriert ist, die jeweils eine Netzverbindung herstellen, wobei die Netzklassenidentifikation eine Netzabdeckungsposition der von jedem Netzgerät hergestellten Netzverbindung angibt;
ein Erzeugungsmodul (402), das zum Erzeugen der Identifikation der Position des bzw. der intelligenten Geräte(s) gemäß der Netzklasseidentifikation am Netzgerät konfiguriert ist; und
ein Anzeigemodul (403), das zum Anzeigen der Identifikation der Position des bzw. der intelligenten Geräte(s) in einer Liste intelligenter Geräte auf dem Endgerät konfiguriert ist;
wobei das Erzeugungsmodul (402) Folgendes aufweist:
ein Bestimmungsuntermodul (4021), das zum Bestimmen von ein oder mehr intelligenten Geräten innerhalb eines Abdeckungsbereichs der Netzabdeckungsposition gemäß der Netzklassenidentifikation konfiguriert ist; und
ein Erzeugungsuntermodul (4022), das zum Erzeugen der Identifikation der Position des bzw. der intelligenten Geräte(s) gemäß der Netzklassenidentifikation und Identitäten der ein oder mehr intelligenten Geräten konfiguriert ist.

6. Mobilvorrichtung nach Anspruch 5, die ferner Folgendes aufweist:
ein Empfangsmodul, das konfiguriert ist zum Empfangen der eingegebenen Netzklassenidentifikation, bevor die Netzklassenidentifikation der ein oder mehr Netzgeräte, die jeweils eine Netzverbindung herstellen, erhalten wird; und/oder
ein Bestimmungsmodul, das zum Bestimmen der Netzklassenidentifikation gemäß einer empfangenen Anweisung zum Auswählen der Netzabdeckungsposition konfiguriert ist.

7. Mobilvorrichtung nach Anspruch 5 oder 6, wobei das Bestimmungsuntermodul (4021) Folgendes aufweist:
eine Bestimmungseinheit, die konfiguriert ist zum Bestimmen von ein oder mehr intelligenten Geräten innerhalb des Abdeckungsbereichs der Netzabdeckungsposition jedes Typs von Netzgeräten, wenn die ein oder mehr Netzgeräte mehrere verschiedene Typen von Netzgeräten aufweisen, und
wobei das Erzeugungsuntermodul (4022) Folgendes aufweist:
eine Erzeugungseinheit, die konfiguriert ist zum Erzeugen der Identifikation der Position des bzw. der intelligenten Geräte(s) der ein oder mehr intelligenten Geräte innerhalb des Abdeckungsbereichs der Netzabdeckungsposition jedes Typs von Netzgeräten, gemäß der Netzklassenidentifikation jedes Typs von Netzgeräten und der Identitäten der ein oder mehr intelligenten Geräte innerhalb des Abdeckungsbereichs der Netzabdeckungsposition jedes Typs der Netzgeräte.

8. Mobilvorrichtung nach einem der Ansprüche 5 bis 7, wobei die ein oder mehr Netzgeräte ein oder mehr von einem Router, einem Repeater und einem Switch aufweisen.

9. Computerprogramm, das bei Ausführen auf einem Prozessor alle Schritte eines Verfahrens nach einem der Ansprüche 1 bis 4 durchführt.

## Revendications

1. Procédé d'identification de dispositifs effectué par un terminal configuré pour gérer des dispositifs intelligents, comprenant :
obtenir (S101) une identification de classe réseau d'un ou de plusieurs dispositifs réseau dont chacun établit une connexion réseau, dans lequel l'identification de classe réseau indique une position de couverture réseau de la connexion réseau établie par chaque dispositif réseau ;
générer (S102) une identification de position de dispositif intelligent conformément à l'identification de classe réseau ; et
afficher (S103) sur le terminal l'identification de position de dispositif intelligent dans une liste de dispositifs intelligents ;
dans lequel le fait de générer (S102) l'identification de position de dispositif intelligent conformément à l'identification de classe réseau comprend :
déterminer (A1) un ou plusieurs dispositifs intelligents dans une portée de couverture de la position de couverture réseau conformément à l'identification de classe réseau ; et
générer (A2) l'identification de position de dispositif intelligent conformément à l'identification de classe réseau et à des identités de l'un ou plusieurs dispositifs intelligents.

2. Procédé selon la revendication 1, dans lequel avant d'obtenir (S101) de l'identification de classe réseau de l'un ou des plusieurs dispositifs réseau dont chacun établit une connexion réseau, le procédé comprend en outre :
recevoir l'identification de classe réseau qui est entrée ; et/ou
déterminer l'identification de classe réseau conformément à une instruction reçue pour sélectionner la position de couverture réseau.

3. Procédé selon la revendication 1 ou 2, dans lequel le fait de déterminer (A1) l'un ou plusieurs dispositifs intelligents dans la portée de couverture de la position de couverture réseau conformément à l'identification de classe réseau comprend :
si l'un ou plusieurs dispositifs réseau comprennent de multiples types différents de dispositifs réseau, déterminer (B1) un ou plusieurs dispositifs intelligents dans la portée de couverture de la position de couverture réseau de chaque type de dispositifs réseau ; et
dans lequel le fait de générer (A2) l'identification de position de dispositif intelligent conformément à l'identification de classe réseau et aux identités de l'un ou plusieurs dispositifs intelligents comprend :
conformément à l'identification de classe réseau de chaque type de dispositifs réseau et aux identités de l'un ou plusieurs dispositifs intelligents dans la portée de couverture de la position de couverture réseau de chaque type des dispositifs réseau, générer (B2) l'identification de position de dispositif intelligent de l'un ou plusieurs dispositifs intelligents dans la portée de couverture de la position de couverture réseau de chaque type de dispositifs réseau.

4. Procédé selon l'une quelconque des revendications 1 à 3, dans lequel l'un ou plusieurs dispositifs réseau comprennent un ou plusieurs d'entre un routeur, un répéteur et un commutateur.

5. Terminal configuré pour gérer des dispositifs intelligents pour identification de dispositifs, comprenant :
un module d'obtention (401) configuré pour obtenir une identification de classe réseau d'un ou plusieurs dispositifs réseau dont chacun établit une connexion réseau, dans lequel l'identification de classe réseau indique une position de couverture réseau de la connexion réseau établie par chaque dispositif réseau ;
un module de génération (402) configuré pour générer, au dispositif réseau, une identification de position de dispositif intelligent conformément à l'identification de classe réseau ; et
un module d'affichage (403) configuré pour afficher l'identification de position de dispositif intelligent dans une liste de dispositifs intelligents sur le terminal ;
dans lequel le module de génération (402) comprend :
un sous-module de détermination (4021) configuré pour déterminer un ou plusieurs dispositifs intelligents dans une portée de couverture de la position de couverture réseau conformément à l'identification de classe réseau ; et
un sous-module de génération (4022) configuré pour générer l'identification de position de dispositif intelligent conformément à l'identification de classe réseau et aux identités de l'un ou plusieurs dispositifs intelligents.

6. Dispositif mobile selon la revendication 5, comprenant en outre :
un module de réception configuré pour, avant que l'identification de classe réseau de l'un ou plusieurs dispositifs réseau dont chacun établit une connexion réseau ne soit obtenue, recevoir l'identification de classe réseau qui est entrée ; et/ou
un module de détermination configuré pour déterminer l'identification de classe réseau conformément à une instruction reçue pour sélectionner la position de couverture réseau.

7. Dispositif mobile selon la revendication 5 ou 6, dans lequel le sous-module de détermination (4021) comprend :
une unité de détermination configurée pour, si l'un ou plusieurs dispositifs réseau comprennent de multiples types différents de dispositifs réseau, déterminer un ou plusieurs dispositifs intelligents dans la portée de couverture de la position de couverture réseau de chaque type de dispositifs réseau ; et
dans lequel le sous-module de génération (4022) comprend :
une unité de génération configurée pour, conformément à l'identification de classe réseau de chaque type de dispositifs réseau et aux identités de l'un ou plusieurs dispositifs intelligents dans la portée de couverture de la position de couverture réseau de chaque type de dispositifs réseau, générer l'identification de position de dispositif intelligent de l'un ou plusieurs dispositifs intelligents dans la portée de couverture de la position de couverture réseau de chaque type de dispositifs réseau.

8. Dispositif mobile selon l'une quelconque des revendications 5 à 7, dans lequel l'un ou plusieurs dispositifs réseau comprennent un ou plusieurs d'entre un routeur, un répéteur et un commutateur.

9. Programme informatique qui, lorsque exécuté sur un processeur, met en œuvre toutes les étapes d'un procédé selon l'une quelconque des revendications 1 à 4.
